# EUROPÄISCHE PATENTSCHRIFT

(11) **EP 0 547 532 B1**
(45) Veröffentlichungstag und Bekanntmachung des Hinweises auf die Patenterteilung: **04.06.1997**
(21) Anmeldenummer: 92121210.6
(22) Anmeldetag: 12.12.1992
(51) Int. Cl.: H01R 13/66

(54) **Anordnung mit einer BCU-Einheit und mit Mitteln zum lösbaren Anschluss an BUS-Leitungen**
Arrangement of BCU-unit and means for a separable connection to a BUS-line
Disposition avec un module BCU et moyens pour connexion séparable aux lignes-BUS

(30) Priorität: 19.12.1991 DE 9115729 U; 24.06.1992 DE 9208422 U
(43) Veröffentlichungstag der Anmeldung: 23.06.1993
(73) Patentinhaber: DEHN + SÖHNE GMBH + CO. KG, D-90489 Nürnberg (DE); SIEMENS AKTIENGESELLSCHAFT, 80333 München (DE)
(72) Erfinder: Kammerl, Franz, Dipl.-Ing. (FH), W-8411 Holzheim a.F (DE); Hasse, Peter, Dr.-Ing., W-8430 Neumarkt/OPf. (DE); Aumeier, Walter, Dipl.-Ing. (FH), W-8430 Neumarkt/OPf. (DE); Igl, Peter, Dipl.-Ing. (FH), W-8430 Neumarkt/OPf. (DE); Strobl, Martin, W-8430 Neumarkt/OPf. (DE)
(74) Vertreter: Richter, Bernhard, Dipl.-Ing.

(56) Entgegenhaltungen:
- EP-A- 0 443 103
- DE-U- 9 100 130
- US-A- 4 630 163

## Beschreibung

Die Erfindung betrifft eine Anordnung mit einer BCU-Einheit und mit Mitteln zum lösbaren Anschluß von BUS-Leitungen an diese BCU-Einheit, welche die BUS-Signale elektrisch an ein Endgerät, Steuerteil oder eine Steckdose weiterleitet, insbesondere entsprechende Anordnung in einem Installationssystem wie dem EIB-System. Dabei kann in bekannter Weise (siehe die nachstehend erläuterte Veröffentlichung von GERLACH) die Signalübertragung und die Kleinspannungsversorgung zumindest der BCU-Einheit über die gemeinsame BUS-Leitung erfolgen. Hierin bedeutet BUS eine Signale bzw. Daten übertragende Leitung, BCU (Bus-Coupling Unit), eine die BUS-Leitungen mit einem Endgerät, Steuerteil oder Steckdose koppelnde Einheit und EIB-System ein europäisches Installations-BUS-System. Diese Steuerungstechnik hat sich vor allem in der Elektroinstallation in der letzten Zeit verstärkt durchgesetzt (siehe GERLACH "Neuere Steuerungstechnik in der Elektroinstallation", etz, Bd 110 (1989), Heft 22. Bei derartigen Anlagen wurde der Überspannungsschutz, zumindest der Überspannungsschutz vor Ort, d.h. an den an die BUS-Leitungen angeschlossenen Endgeräten, entsprechenden Steuerteilen oder Steckdosen, nicht berücksichtigt. Ein mangelnder Überspannungsschutz kann aber zu Schädigungen oder sogar Ausfall der über die BUS-Leitungen mit Steuerungssignalen zu versorgenden elektrischen Endgeräte oder Steuerteile, insbesondere elektronischen Bauteilen der Endgeräte oder Steuerteile führen. Die vorgenannten elektrischen Bauelemente, insbesondere ein in der BCU-Einheit eingebauter Mikroprozessor, sind gegen Überspannungen äußerst empfindlich und müssen daher hinreichend geschützt werden. Andernfalls können sehr schwerwiegende Schäden eintreten.

Aus DE-GM 91 00 130 ist eine Überspannungsschutzeinrichtung für Daten verarbeitende Geräte bekannt, wobei diese Geräte sowohl an ein Versorgungsnetz, als auch an ein Datennetz angeschlossen sind. Um Überspannungen in diesen getrennten Netzen abzuleiten, ist in Form eines Zwischenadapters sowohl für das Versorgungsnetz als auch das Datennetz eine Überspannungsschutzeinrichtung vorgesehen. Zur elektrischen Koppelung dieser separaten Überspannungsschutzeinrichtungen dient die gemeinsame Masseleitung einer Trägerplatine, welche den PE-Leiter des Versorgungsnetzes mit der Masse des Datennetzes elektrisch verbindet. Dabei erlaubt die gemeinsame Trägerplatine die Unterbringung der Überspannungsschutzmittel beider Netze auf sehr kleinem Raum und auf einem Bauelement. Zugleich hat sie im Gegensatz zur vorliegenden Erfindung ausdrücklich die Funktion einer elektrischen Koppelung beider Netze, so daß etwaige Spannungsanhebungen des einen Netzes gegenüber dem anderen Netz ausgeglichen werden. Diese bekannte Überspannungsschutzeinrichtung erfüllt also nicht die Merkmalsanordnung des Oberbegriffes des Patentanspruches 1, da sich dieser Oberbegriff in seiner Gesamtheit mit der speziellen Ausgestaltung einer Anordnung mit einer BCU-Einheit und zugehörigen BUS-Leitungen befaßt. Es soll die Aufgabe gelöst werden, die elektrische Koppelung zwischen zwei getrennten Netzen, d.h. Versorgungsnetz bzw. Datennetz zu vereinfachen und kompakter zu machen. Dies hat nichts mit der nachstehend erläuterten Aufgabenstellung der Erfindung zu tun. Noch viel weniger sind die Merkmale des nachstehend erläuterten kennzeichnenden Teiles dieses Patentanspruches 1 dem Gm 91 00 130 entnehmbar. Dabei ist zur Erdung darauf hinzuweisen, daß keine gesonderte Erdleitung vorgesehen ist. Vielmehr erfolgt durch Einstecken der Steckdose ins Netz automatisch die Erdung über PE.

Aus US-A-4,630,163 ist es bekannt, Überspannungsschutzeinrichtungen für Netzversorgungsleitungen vorzusehen, welche als Zwischenadapter an die vom Stromnetz zu einem Verbraucher führenden Netzversorgungsleitungen parallel angeschlossen sind.

Die Aufgaben- bzw. Problemstellung der Erfindung besteht demgegenüber darin, mit baulich einfachen und elektrisch sicheren Mitteln bei einer Anordnung gemäß dem vorgenannten Oberbegriff des Anspruches 1 vor Ort für einen Überspannungsschutz der Endgeräte, dort befindlicher Steuerteile oder dort vorgesehener Steckdosen zu sorgen, welche die Steuersignale an die Endgeräte oder Steuerungsteile weiterleiten. Insbesondere soll die Möglichkeit gegeben sein, schon vorhandene BCU-Einheiten mit dem Überspannungsschutz nach der Erfindung nachträglich versehen zu können (sogenannte Nachrüstung).

Erfindungsgemäß wird diese Aufgaben- bzw. Problemstellung bei einer Anordnung nach dem Oberbegriff des Anspruches 1 zunächst dadurch gelöst, daß zwischen den BUS-Anschluß einerseits und das Endgerät, den Steuerteil oder die Steckdose andererseits Überspannungsschutzmittel geschaltet und derart mit den BUS-Leitungen verbunden sind, daß an oder zwischen den BUS-Leitungen entstehende Überspannungen über eine zu den Überspannungsmitteln geführte Erdleitung abgeleitet werden, und daß sich die Überspannungsschutzmittel innerhalb eines gesonderten Bauelementes befinden und mit diesem eine Überspannungsschutzeinheit bilden, die mit der BCU-Einheit in Verbindung steht. Hiermit ist räumlich an der gewünschten Stelle, nämlich vor Ort, ein Überspannungsschutz installiert, und zwar am Ausgang zueinander gehörender BUS-Leitungen, sowie am Eingang des zugehörigen Endgerätes, Steuerungsteiles oder damit verbundener Steckdose. Dies ist wichtig, weil eine zentrale, z.B. nur gebäudeeingangsseitig vorgesehene Überspannungsschutzanordnung zwar dort anfallende Überspannungen unschädlich machen kann. Es können aber trotzdem, z.B. durch im Gebäude entstehende elektrische Induktionen, auch Überspannungen an den im Gebäude verlegten Leitungen entstehen, die von einer zentralen Überspannungsschutzanordnung nicht erfaßt werden. Da zu den vorgenannten Leitungen auch die genannten BUS-Leitungen gehören, ist mit der Erfindung dafür gesorgt, daß gesondert vom Überspannungsschutz der Starkstromanlage derartige Überspannungen der BUS-Leitungen vor Erreichen des Endgerätes oder Steuerteiles bzw. der Steckdose abgeleitet werden. Es erfolgt also mittels ein und derselben Überspannungsschutzmittel sowohl ein Schutz der BCU-Einheit als auch der an die BCU-Einheit angeschlossenen Endgeräte bei der Signalübertragung sowie Spannungsversorgung. Wichtig ist, daß auch die BCU-Einheit mit den in ihr befindlichen Teilen, insbesondere dem dort vorgesehenen Mikroprozessor, hiermit gegen die schädlichen Wirkungen von Überspannungen geschützt ist. Die Überspannungsschutzeinheit bildet ein gesondertes Bauelement, das fabrikatorisch für sich hergestellt werden kann, was entsprechende Fertigungsvorteile mit sich bringt. Eine weitere Distanzierung vom Stand der Technik besteht in dem Merkmal, daß die zwischen den BUS-Leitungen entstehenden Überspannungen über eine zu den Überspannungsschutzmitteln geführte Erdleitung abgeleitet werden. Hiermit wird dem Tatbestand einer Anordnung nach dem Oberbegriff des Anspruches 1 gerecht, daß BUS-Leitungen keine Erdung haben, das Erdungsproblem also gesondert zu lösen ist. Von Vorteil ist ferner, daß die mechanische und die elektrische Verbindung dieser Überspannungsschutzeinheit sowohl mit der BCU-Einheit, als auch mit den BUS-Leitungen in unterschiedlicher Weise durchführbar ist. Wie aus den weiteren Ausführungen noch näher hervorgeht, ist bevorzugt diese Anordnung nach der Erfindung so getroffen, daß mechanisch und elektrisch sowohl an der BCU-Einheit, als auch an der Ausgangsseite der BUS-Leitungen nichts verändert werden muß, d.h. es kann diese Überspannungsschutzeinheit nach der Erfindung mit schon vorhandenen BCU-Einheiten und BUS-Leitungen gekoppelt werden (sogenannte Nachrüstung). Eine solche Überspannungsschutzeinheit kann relativ klein und dabei berührungssicher ausgestaltet sein, so daß sie sich auch aufgrund ihres geringen Platzbedarfes problemlos in der Praxis einsetzen läßt. Zusammengefaßt ergibt sich, daß die Erfindung eine im Hinblick auf die Aufgabenstellung zum einen vorteilhafte und zum zweiten in ihrem Aufbau sehr einfache Lösung vorsieht und sich von konventionellen Überspannungsschutzeinrichtungen gemäß dem Stand der Technik dabei in mehrfacher Hinsicht unterscheidet.

Eine bevorzugte Ausführungsform der Erfindung ist Gegenstand des Anspruches 2. Dies gibt eine kompakte, sämtliche Anschlußmittel enthaltende Überspannungsschutzeinheit.

Die Überspannungsschutzeinheit bildet bevorzugt ein Zwischensteckteil gemäß den Merkmalen des Anspruches 3. Dieser Zwischensteckteil wird anstelle der üblichen BUS-Klemme an die BCU-Einheit gesteckt, und die BUS-Klemme wird auf den Zwischensteckteil aufgesteckt.

Eine ebenfalls bevorzugte, bauliche Ausgestaltung der spannungsschutzeinheit ist Gegenstand des Anspruches 8.

Wie vorstehend bereits angesprochen, besteht ein weiteres Ziel der Erfindung in einer Raumersparnis. Hierzu dienen die Merkmale des Anspruches 9, womit außerdem die vorstehend ebenfalls schon erwähnte Nachrüstung einer vorhandenen BCU-Einheit möglich ist.

Auch die Merkmale des Anspruches 10 dienen der Raumersparnis und schaffen eine sehr kompakte Bauweise aus BCU-Einheit, Überspannungsschutzeinheit und Klemmstein.

Hinsichtlich der baulichen Ausführung empfiehlt sich die Anordnung nach Anspruch 12. Die Platine kann mit Überspannungsschutzmitteln und auf der Platine befindlichen Leiterbahnen für sich hergestellt werden, um dann mit dem Gehäuse und eventuell einem separaten Gehäuseunterboden (siehe Anspruch 14) zur Überspannungsschutzeinheit zusammengesetzt zu werden.

Eine weitere Ausführungsmöglichkeit der Erfindung ist Gegenstand des Anspruches 20. Auch hierdurch wird der Raumbedarf einer solchen Anordnung verringert. Dies gilt insbesondere bei Mitverwendung der Merkmale des Anspruches 21. Außerdem können hiermit derartige handelsüblich vorgesehene BCU-Einheiten durch Einstecken einer derart ausgebildeten nungsschutzeinheit mit einem Überspannungsschutz versehen, d.h. entsprechend nachgerüstet werden, ohne dabei zusätzlichen Raum zu beanspruchen. In dem Zusammenhang besteht eine weitere bevorzugte Ausführungsform der Erfindung in der Lehre des Anspruches 22.

Eine Variante in der Leitungsverbindung und räumlichen Anordnung eines Klemmsteines und der Überspannungsschutzeinheit - letztere insbesondere bei Unterbringung in einem im wesentlichen allseitig geschlossenen, würfelförmigen Gehäuse - ist Gegenstand der Ansprüche 25 bis 27.

Die Anordnung nach der Erfindung erlaubt unterschiedliche Schaltungen der Überspannungsschutzmittel und auch unterschiedliche Anschlußmöglichkeiten der BUS-Leitungen an die Überspannungsschutzeinheit.

Weitere Vorteile und Ausführungsmöglichkeiten der Erfindung sind den weiteren Unteransprüchen sowie der nachfolgenden Beschreibung und der zugehörigen Zeichnung von erfindungsgemäßen Ausführungsmöglichkeiten zu entnehmen. In den im wesentlichen perspektivischen Zeichnungen zeigt:
- Fig. 1:: eine erste Ausführungsform der Erfindung in sogenannter Explosions-Darstellung mit BCU-Einheit,
- Fig. 2:: die Überspannungsschutzeinheit nach Fig. 1 zusammengesetzt und in die BCU-Einheit eingebaut,
- Fig. 3, 3a u. 3b:: die Einzelteile der zur Ausführung nach Fig. 1 und 2 gehörenden Überspannungsschutzeinheit,
- Fig. 4:: in einem etwas vergrößerten Maßstab eine Platine mit Überspannungsschutzmitteln gemäß Fig. 3a in einer Ansicht von unten,
- Fig. 5:: die vorgenannte Überspannungsschutzeinheit in einem Schnitt gemäß der Linie V-V in Fig. 1,
- Fig. 6:: ein elektrisches Schaltbild einer Anordnung nach der Erfindung, das bei der Ausführung nach den Fig. 1 bis 5 vorgesehen sein kann.
- Fig. 7:: ein abgewandeltes Ausführungsbeispiel der Erfindung,
- Fig. 8:: einen Schnitt durch Fig. 7 gemäß der Linie VIII-VIII;
- Fig. 9:: die zu dem Beispiel der Fig. 7, 8 gehörende Platine mit Überspannungsschutzmitteln,
- Fig. 10:: das zur Anordnung nach den Fig. 7 bis 9 gehörende elektrische Schaltbild,
- Fig. 11:: eine weitere Ausführungsform der Erfindung.
- Fig. 12:: eine weitere Ausführungsform der Erfindung in perspektivischer und sogenannter Explosions-Darstellung,
- Fig. 13:: die Anordnung nach Fig. 12, ebenfalls perspektivisch dargestellt, wobei jedoch die Teile zusammengesetzt sind,
- Fig. 14:: in einem gegenüber Fig. 12 und 13 größeren Maßstab perspektivisch den Inneneinbau eines Klemmsteines gemäß Fig. 12 und 13,
- Fig. 15:: eine weitere Ausführungsmöglichkeit der Erfindung,
- Fig. 16, 17: zwei weitere Ausführungsmöglichkeiten der Erfindung, jeweils in perspektivischer Darstellung.

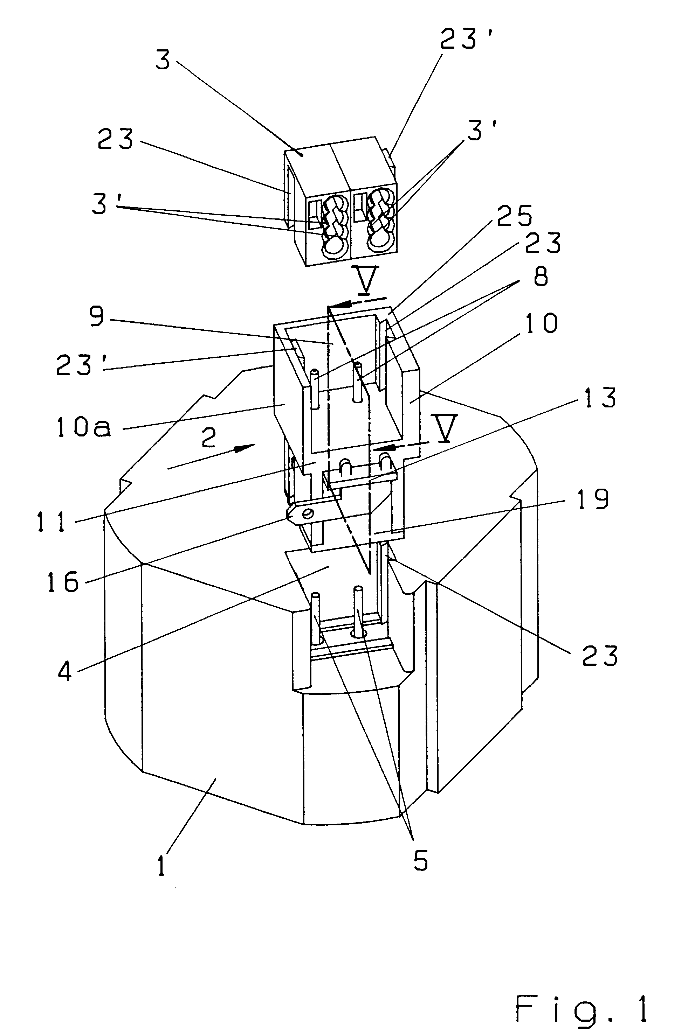

Fig. 1 zeigt eine BCU-Einheit 1 mit der Überspannungsschutzeinheit 2 und einem Klemmstein 3, der z.B. mit Schneidklemmen 3', zur Anbringung von BUS-Leitungen 17 versehen ist.

Die BCU-Einheit ist an ihrer in Fig. 1 nicht sichtbaren unteren Seite mit dem Endgerät, Steuerteil oder einer Steckdose verbunden. Dies ist Stand der Technik und daher zeichnerisch nicht dargestellt.

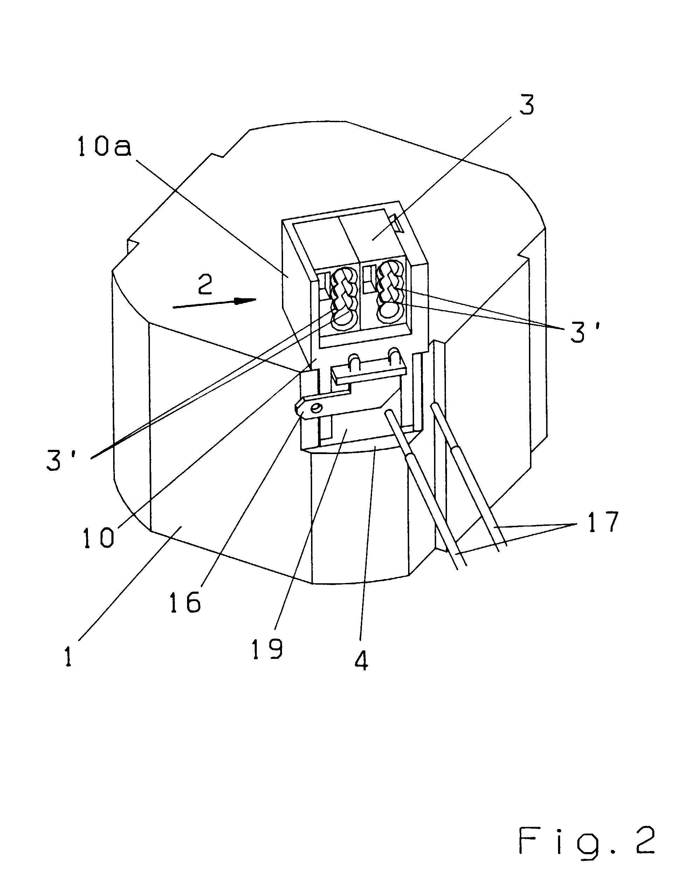

Gestaltung und Funktion der vorgenannten Bauelemente 1, 2 und 3 wird nachstehend unter gleichzeitiger Bezugnahme auf die Fig. 2 bis 5 im Detail erläutert:

Die BCU-Einheit 1 besitzt in einer in der Draufsicht bevorzugt rechteckigen oder quadratischen Aussparung 4 zwei Stecker 5, und zwar bevorzugt in der Form, Anordnung und Abstand voneinander, wie sie bereits zum Aufstecken von BUS-Leitungen zum Stand der Technik gehören.

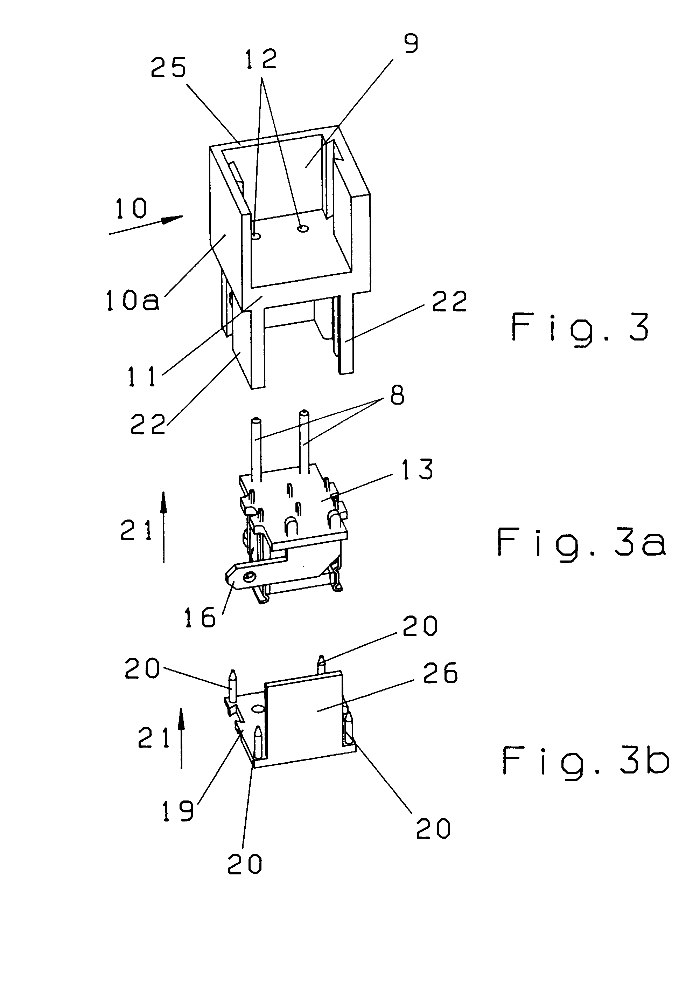

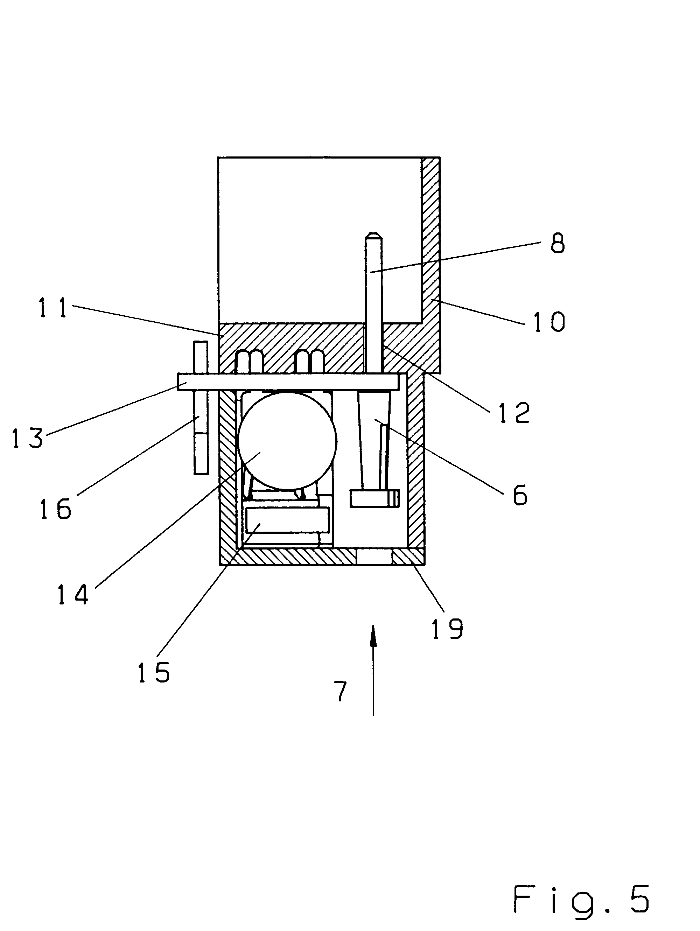

Die Überspannungsschutzeinheit 2 besitzt unterseitig (die Begriffe "oben" und "unten" sind immer auf die Lage gemäß den Darstellungen in der Zeichnung bezogen) zwei Buchsen 6, in welche gemäß Pfeil 7 (siehe Fig. 5) die Stecker 5 einsteckbar sind. Ferner besitzt die Überspannungsschutzeinheit 2 zwei weitere Stecker 8, die nach oben in einen Raum 9 Dineinragen, der ebenfalls bevorzugt in der Draufsicht rechteckig oder quadratisch ist. Die Buchsen 6 und Stecker 8 sind an einer Platine 13 angebracht, wie es insbesondere der Einzeldarstellung gemäß Fig. 3 zu entnehmen ist. Ein Zwischenboden 11 des Gehäuses ist mit zwei Bohrungen 12 für die Hindurchführung der Stecker 8 versehen. Stecker 5, Buchsen 6 und Stecker 8 sind bevorzugt in einer Linie fluchtend angeordnet.

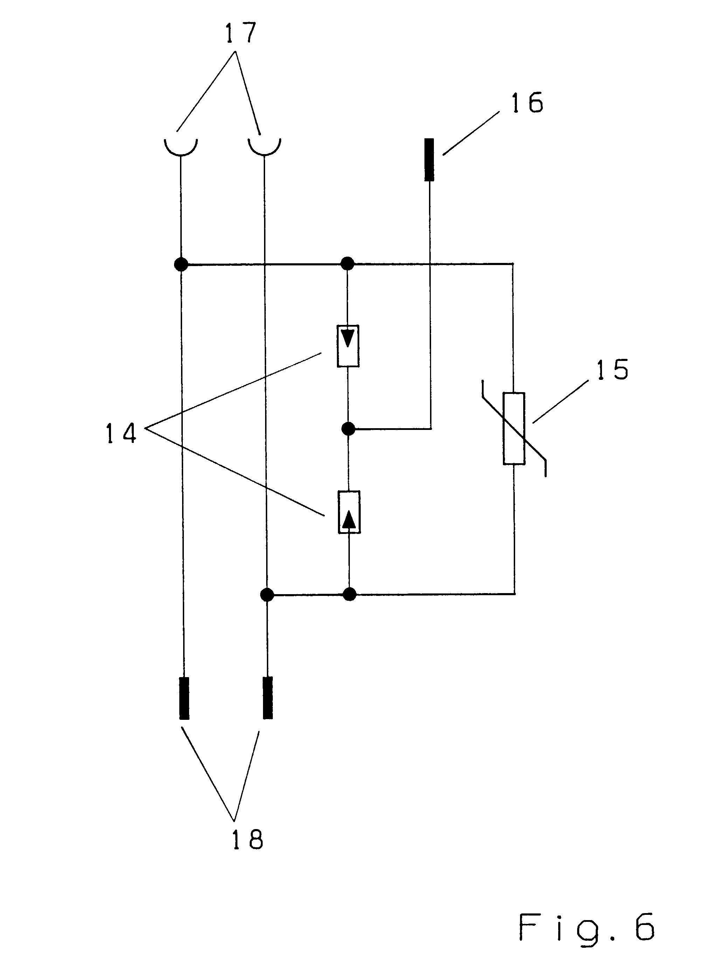

Die Stecker 8 befinden sich an der o.g. Platine 13, welche Überspannungsschutzmittel wie einen Gasableiter 14 und Varistoren oder Supressordioden 15 trägt und miteinander sowie mit den Anschlüssen verschaltet. Außerdem ist an der Platine 13 ein Funktionserdungsanschluß (FE) 16 vorgesehen bzw. davon gehalten. Die entsprechende Schaltung ist Fig. 6 zu entnehmen. Die Gasableiter 14 dienen dem Grobschutz und die Varistoren oder Supressordioden 15 dem Feinschutz gegen Überspannungen. Mit 17 sind die o.g. BUS-Zuleitungen und mit 18 die Zuleitungen zum zu schützenden Endgerät oder dergleichen beziffert. Funktionsmäßig entsprechen dabei die Leitungen 17 den Steckern 8 und die Leitungsanschlüsse 18 den Steckern 5.

Ferner kann ein Gehäuseunterboden 19 vorgesehen sein, der die von der Platine 13 getragenen Überspannungsschutzmittel unterseitig abdeckt und Stifte 20 aufweist, die zu seiner Steckverbindung mit dem Gehäuse 10 dienen.

Fabrikatorisch kann man so vorgehen, daß zunächst die Platine 13 mit den von ihr getragenen Teilen montiert und dann gemäß Pfeil 21 in Fig. 3 nach oben zwischen untere Seitenwände 22 des Gehäuses 10 eingesteckt wird, bis die Stecker 8 aus den Bohrungen 12 nach oben in den Raum 9 hineinragen. Anschließend wird zum Zusammenhalt der gesamten Überspannungsschutzeinheit und auch zur unterseitigen Abdeckung der Unterboden 19 in Pfeilrichtung 21 gegen die Platine bewegt und mit dem Gehäuse 10 zusammengesteckt, bis die Teile die Endposition gemäß den Fig. 1 und 5 einnehmen. Der hiermit gebildete Zwischenadapter kann oberseitig den Klemmstein 3 durch dessen Stecken auf die Stecker 8 aufnehmen, so daß die BUS-Leitungen von der Seite her zwischen die Schneidklemmen 3' des Klemmsteines gesteckt und durch deren Schneiden gehalten werden. Unterseitig wird die Überspannungsschutzeinheit auf die Stecker 5 der BCU-Einheit gesteckt. Die vorgenannten Steckverbindungen zwischen der Überspannungsschutzeinheit einerseits und dem Klemmstein 3, sowie der BCU-Einheit andererseits kann noch durch etwa schwalbenschwanzförmige Führungen 23 und darin eingreifende, im Querschnitt schwalbenschwanzförmige Steckleisten 23' verbessert werden.

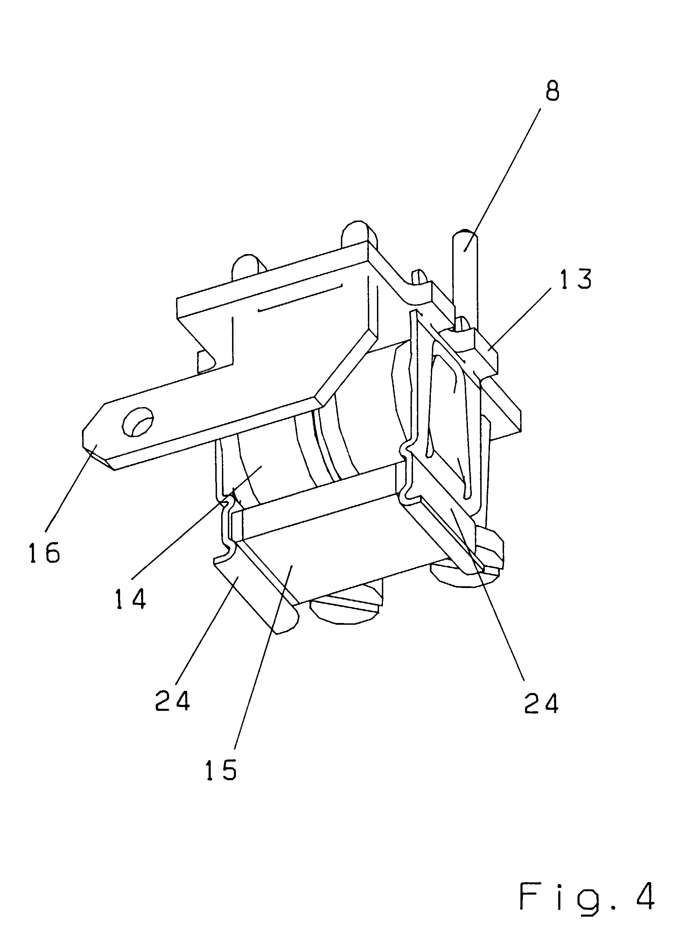

Seitenbleche 24 (siehe Fig. 4) können mit elektrischem Schluß die Gasableiter 14 aufnehmen.

Das Gehäuse 10 hat zwei obere Seitenwände 10a und eine Rückwand 25. Der Unterboden hat eine Vorderwand 26, so daß mit den Seitenwänden 22 das Gehäuse 10 geschlossen wird. Wie die Zeichnungen zeigen, können die Überspannungsschutzmittel berührungssicher im Gehäuse untergebracht werden. Hierzu kann die Außenform des die Überspannungsschutzmittel in sich aufnehmenden, im wesentlichen allseitig geschlossenen Gehäuses 10 etwa würfelförmig sein.

Das vorstehend erläuterte Ausführungsbeispiel der Fig. 1 bis 6 zeigt eine bauliche Zusammenfassung der BCU-Einheit mit Überspannungsschutzeinheit und mit dem Klemmstein, in dem die BUS-Leitung lösbar angebracht wird.

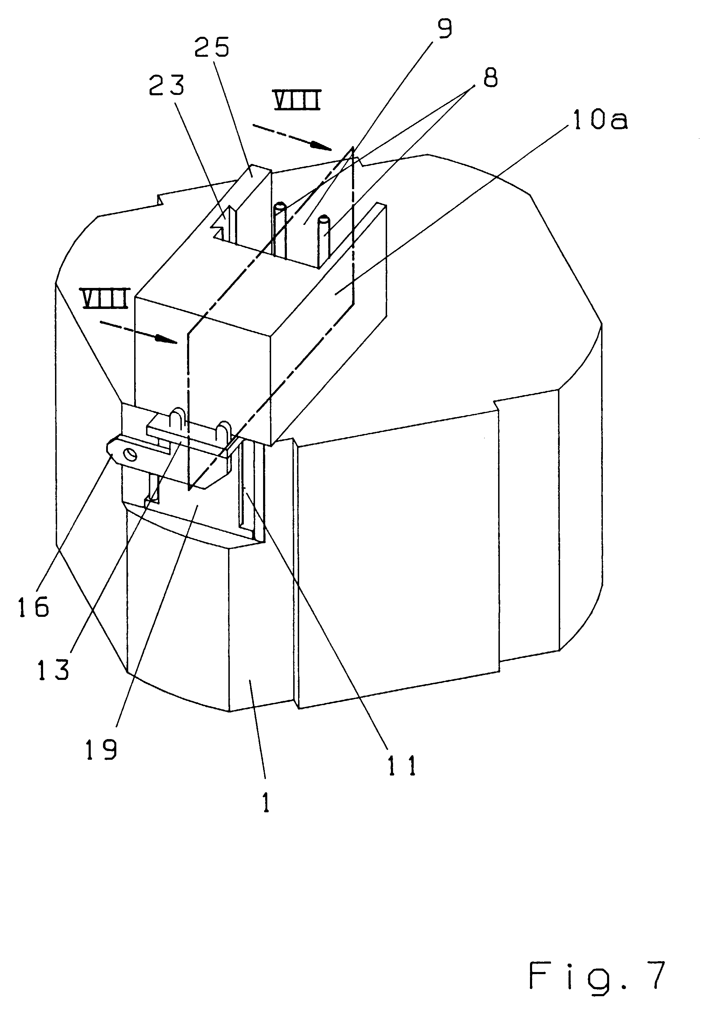

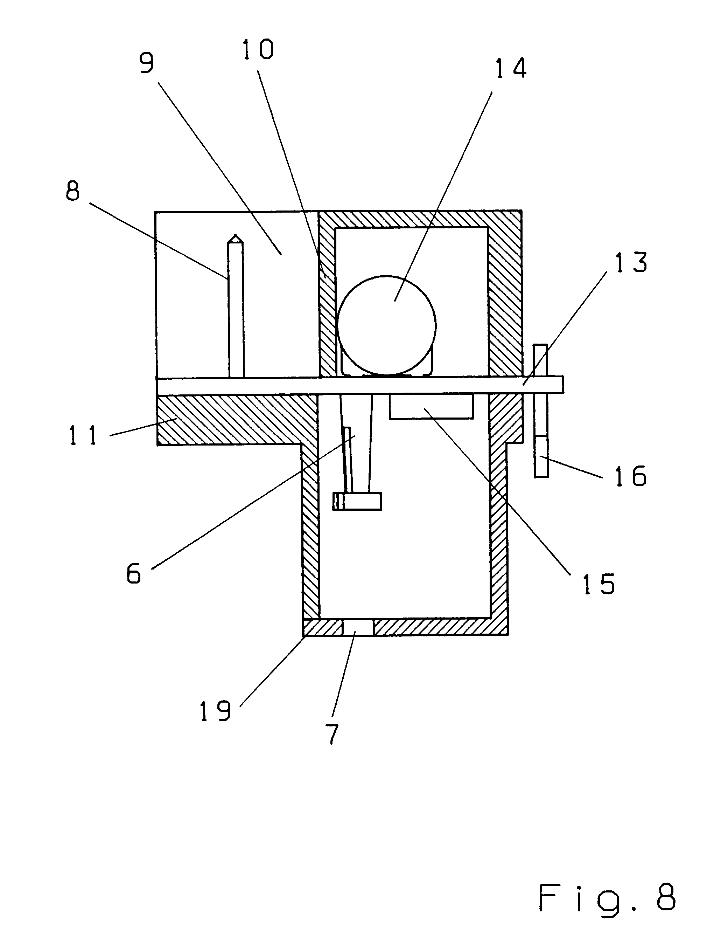

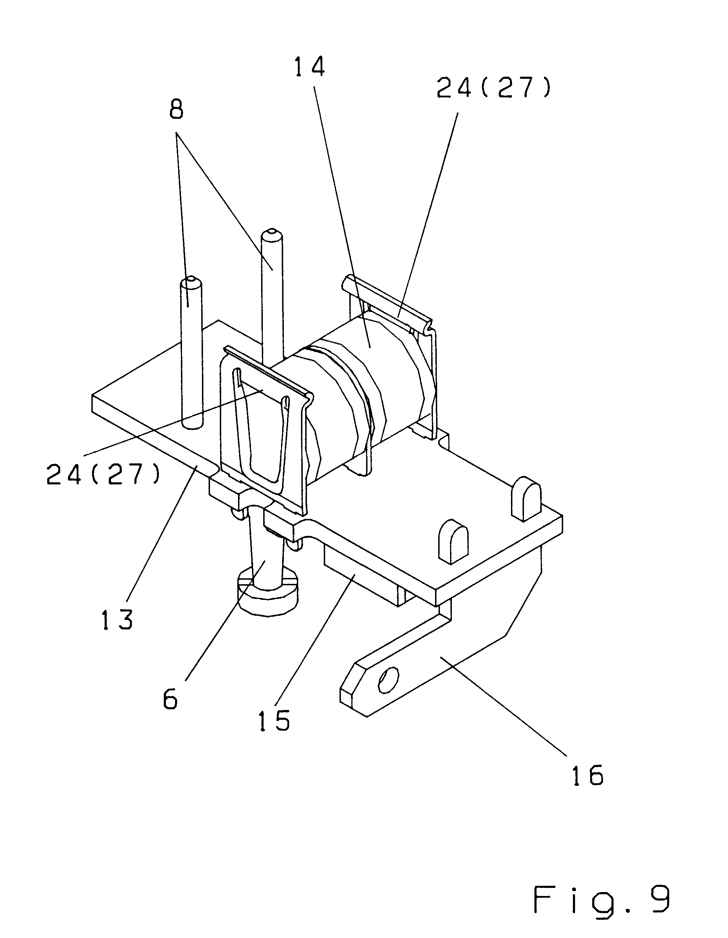

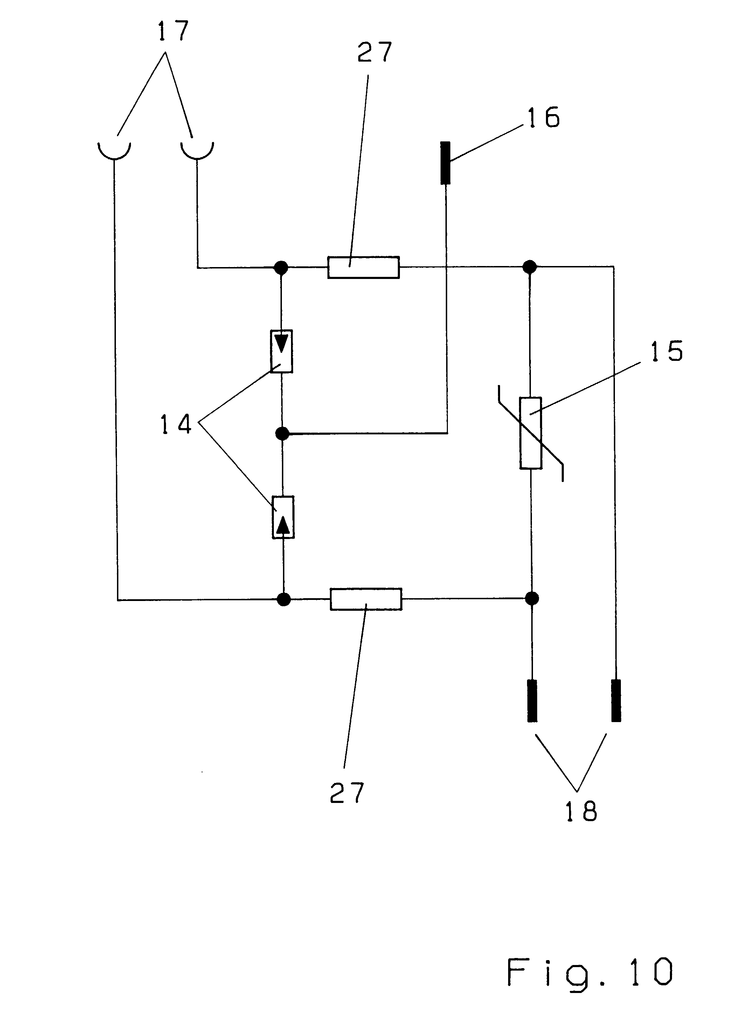

Das Ausführungsbeispiel der Fig. 7 bis 9 ist im wesentlichen so wie das Ausführungsbeispiel nach den Fig. 1 bis 5 aufgebaut, wobei aber zur Verwirklichung einer Schaltungsanordnung gemäß Fig. 10 die dort vorgesehenen Längsimpedanzen 27 baulich mit integriert sind. Das Schaltbild der Fig. 10 unterscheidet sich von dem der Fig. 6 dadurch, daß der Grob-Überspannungsschutz (auch hier in Form von Gasableitern 14) sich zwischen den Signaladern 17 von BUS einerseits und der Erdableitung (FE) 16 befindet. Im Längsweg der Leitungsadern 17 zum Ausgang 18 sind die vorgenannten Längsimpedanzen 27, welche der Entkoppelung dienen, vorgesehen. Die Varistoren oder Supressordioden 15 (Feinschutz) sind ausgangsseitig zwischen die BUS-Leitungen geschaltet. Ebenso wie in Fig. 10 sind auch in den Fig. 7 bis 9 die in ihrer Funktion mit den Bauteilen der Fig. 1 bis 5 gleichen Bauteile mit denselben Bezugsziffern wie im Beispiel der Fig. 1 bis 5 bezeichnet. Die Seitenbleche 24 haben hier zugleich die Funktion der Längsimpedanzen 27, wie in Fig. 9 durch die hinter der Ziffer 24 in Klammern gesetzten Ziffern 27 angedeutet. Die aus Metall bestehende Seitenwand 24 ist gegenüber den anderen Teilen isoliert, z.B. durch Einstecken in das Isolationsmaterial der Platine 13. Die Platine 13 ist auch hier mit Leiterbahnen versehen, welche die Anschlüsse und die Schaltung gemäß Fig. 10 realisieren. Die Platine 13 ist ein Stück zur Seite hin verlängert, wobei an dieser, die Erdung FE bzw. 16 tragenden Verlängerung sich zwei Feinschutzelemente (Varistoren oder Supressordioden) 15 befinden. Dadurch wird, wie ein Vergleich der Fig. 7 und 2 zeigt, die Überspannungsschutzeinheit 2 im zweiten Ausführungsbeispiel entsprechend länger als im ersten Ausführungsbeispiel.

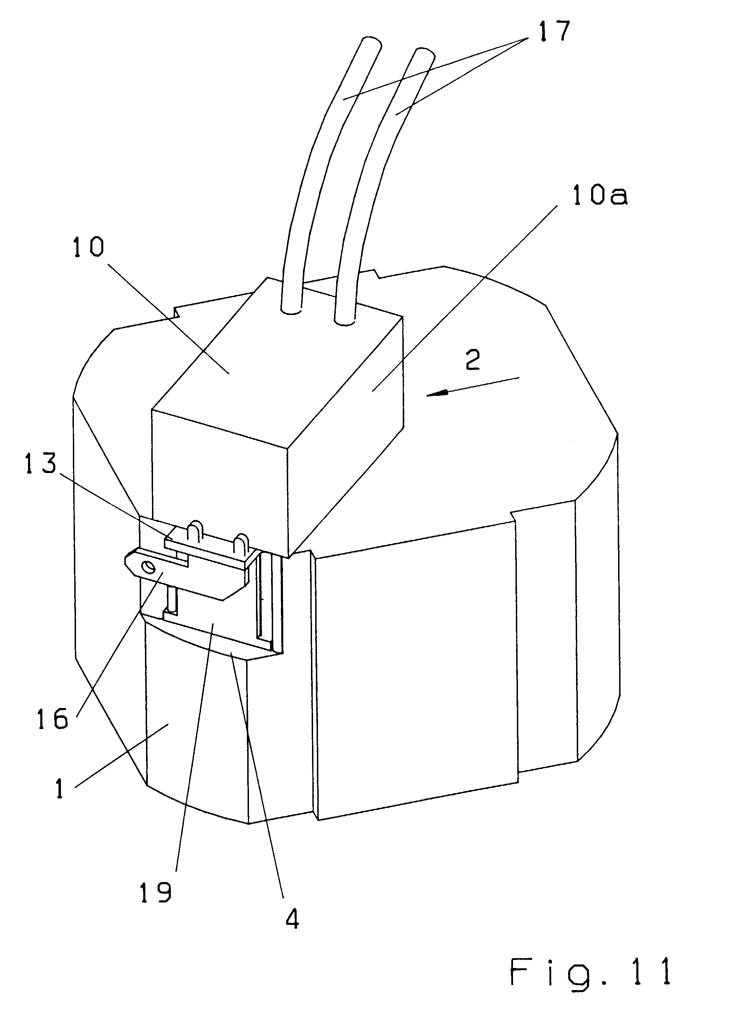

In die Öffnung 9 der Fig. 7 ist der Klemmstein 3 aus Fig. 1 auf die Stecker 8 steckbar, wobei der Klemmstein 3 in Fig. 7 nicht mit eingezeichnet ist. Statt dessen können auch die BUS-Zuleitungen 17 innerhalb der Überspannungsschutzeinheit 2 fest angebracht, z. B. verlötet, und aus dieser herausgeführt sein. Dies ist bei der Ausführung nach Fig. 11 vorgesehen.

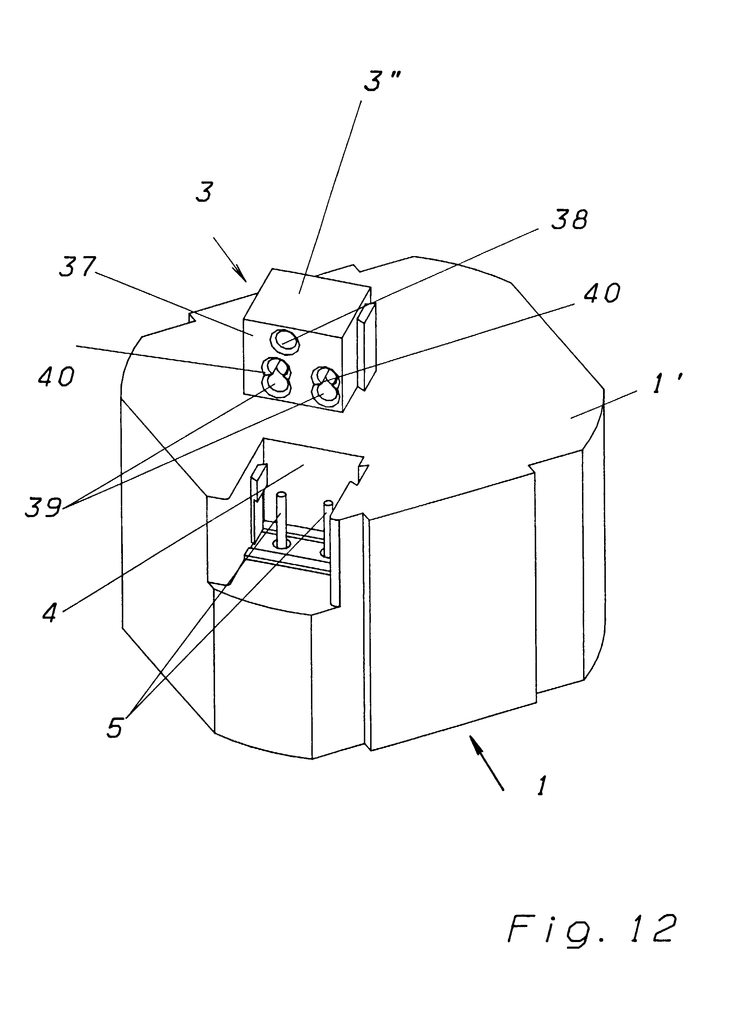

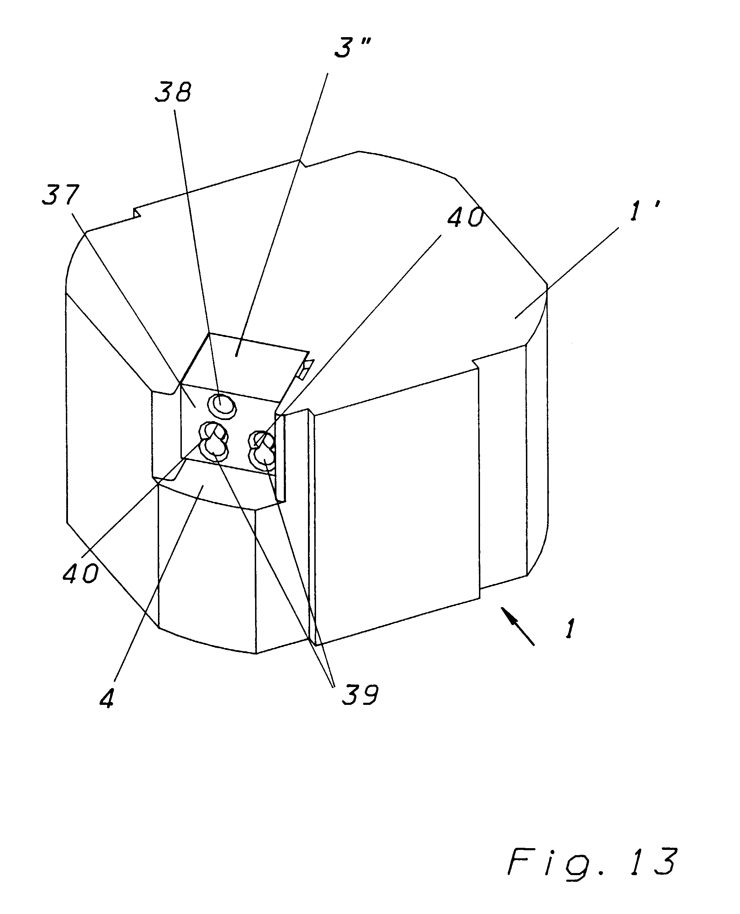

Das Ausführungsbeispiel der Fig. 12 bis 14 zeigt, daß eine Überspannungsschutzeinheit, hier in Form eines Klemmsteines 3, in die für die Aufnahme solcher Klemmsteine in handelsüblichen BCU-Einheiten 1 vorgesehene Aussparung 4 paßt, und zwar einschließlich der Überspannungsschutzmittel, die in diese Überspannungsschutzeinheit in der Form eines Klemmsteines eingebaut sind. Gegenüber den Ausführungsbeispielen nach den Fig. 1 bis 5 und 7 bis 11 reduziert sich der Raumbedarf einer solchen Anordnung auf den Raumbedarf vorbekannter BCU-Einheiten mit eingestecktem Klemmstein, besitzt aber durch den Einbau von Überspannungsschutzmitteln in den Klemmstein (einschließlich der zugehörigen Anschlüsse) zugleich die Vorteile eines Überspannungsschutzes. Hierbei ist es von Vorteil, daß die obere Fläche 3'' des Klemmsteines 3 in der eingesetzten Lage gemäß Fig. 13 mit der sie bzw. die Aussparung 4 umgebenden Oberfläche 1' der BCU-Einheit 1 bündig ist. Aber auch dann, wenn die obere Fläche des Klemmsteines oder einer entsprechenden Überspannungsschutzeinheit noch etwas über die umgebende Oberfläche 1' der BCU-Einheit hinausragen sollte, wird noch eine ins Gewicht fallende Raumersparnis erzielt. Der ebenfalls bevorzugt würfelförmige und allseits geschlossene (ausgenommen natürlich die Zu- und Ableitungen) Kleimmstein 3 nimmt also zusammen mit der BCU-Einheit nicht mehr an Raum ein als die BCU-Einheit mit einem vorbekannten, keinen Überspannungsschutz aufweisenden Klemmstein.

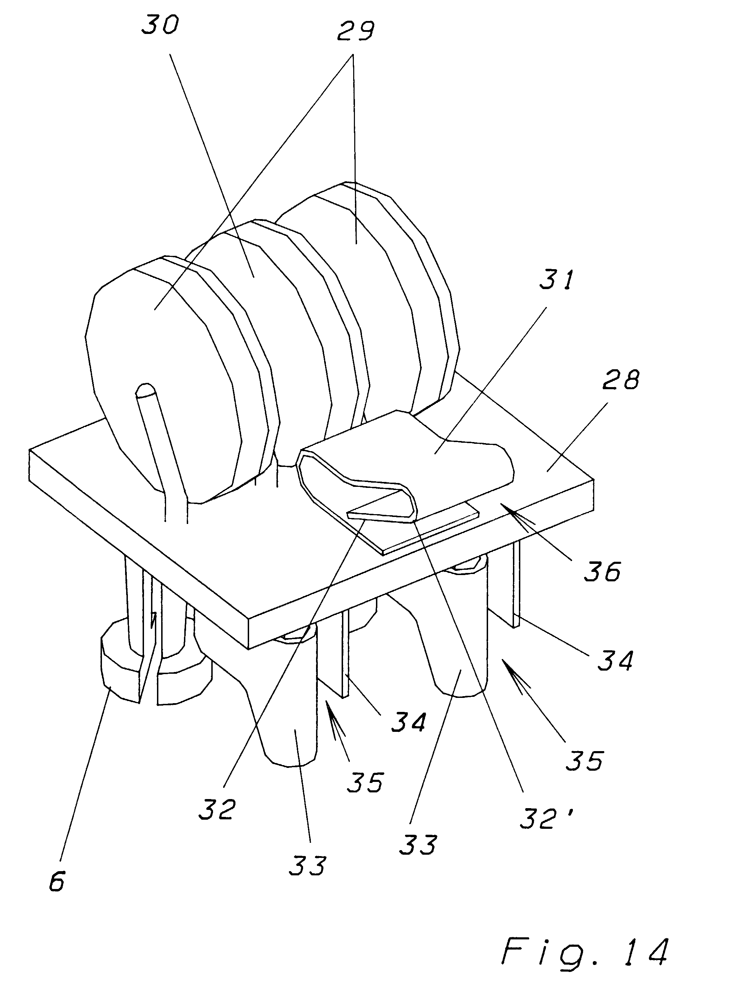

Fig. 14 zeigt das Innere eines Klemmsteines 3 gemäß Fig. 12, 13. Es ist eine Grundplatte 28 vorgesehen, die an ihrer oberen Seite zwei, aus Platzgründen bevorzugt scheibenförmige Gasentladungsableiter 29 und einen Varistor 30 trägt. Als Erdanschluß ist ein federndes, abgebogenes Klemmblech 31 vorgesehen, dessen Abbiegung 32 mit einer darunter befindlichen Platte 32' eine durch Pfeil 36 angedeutete Einstecköffnung für den Erdanschluß bildet. Von der Unterfläche der Grundplatte 28 erstrecken sich Buchsen 6 nach unten, die zum Aufstecken über die Stecker 5 der BCU-Einheit dienen. Insoweit haben sie die gleiche Funktion und Aufgabe wie die Buchsen 6 in den vorhergehenden Ausführungsbeispielen.

Zwischen abgebogene Bleche 33 einerseits und Blechplatten 34 andererseits können in Pfeilrichtung 35 die Phasenanschlüsse der BUS-Leitungen eingesteckt werden. Die Einsteckrichtungen 35 und die o.g. Einsteckrichtung 36 für den Erdanschluß sind zueinander parallel und stehen im rechten Winkel zu der aus Fig. 12, 13 ersichtlichen Seitenwand 37 des Klemmsteines 3. Somit kann die vorgenannte Seitenwand 37 des Klemmsteines 3 die Einstecköffnungen 38 für die Erdleitung und die Einstecköffnungen 39 für die beiden Phasen der BUS-Leitung aufweisen. Dabei sind die Einstecköffnungen 39 mit Klemmkanten 40 entsprechend den bei solchen Klemmsteinen üblichen Klemmkanten versehen.

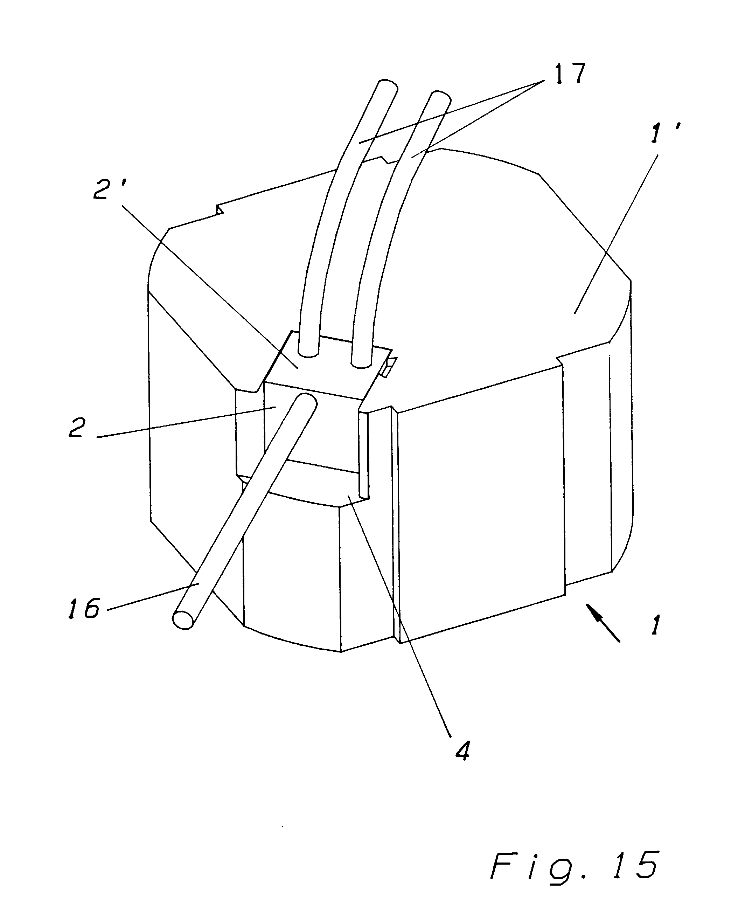

Fig. 15 zeigt eine BCU-Einheit 1 mit Aussparung 4 und eine daran passende Überspannungsschutzeinheit 2, deren Oberfläche 2' ebenfalls mit der Oberfläche 1' der BCU-Einheit bündig ist. Hiermit wird die gleiche Raumersparnis erzielt wie im zuvor erläuterten Ausführungsbeispiel der Fig. 12 bis 14. In diese Überspannungsschutzeinheit sind die hier nicht im einzelnen dargestellten Überspannungsschutzmittel eingebaut. Eine fest angebrachte, nicht herausziehbare BUS-Leitung 17 führt in die Überspannungsschutzeinheit 2 hinein. Ferner führt eine Erdleitung 16 aus der Überspannungsschutzeinheit 2 hinaus. Daß die BUS-Leitungen 17 an der nungsschutzeinheit auch lösbar anbringbar sind, zeigen die Ausführungsbeispiele der Fig. 1 bis 10 und 12 bis 14.

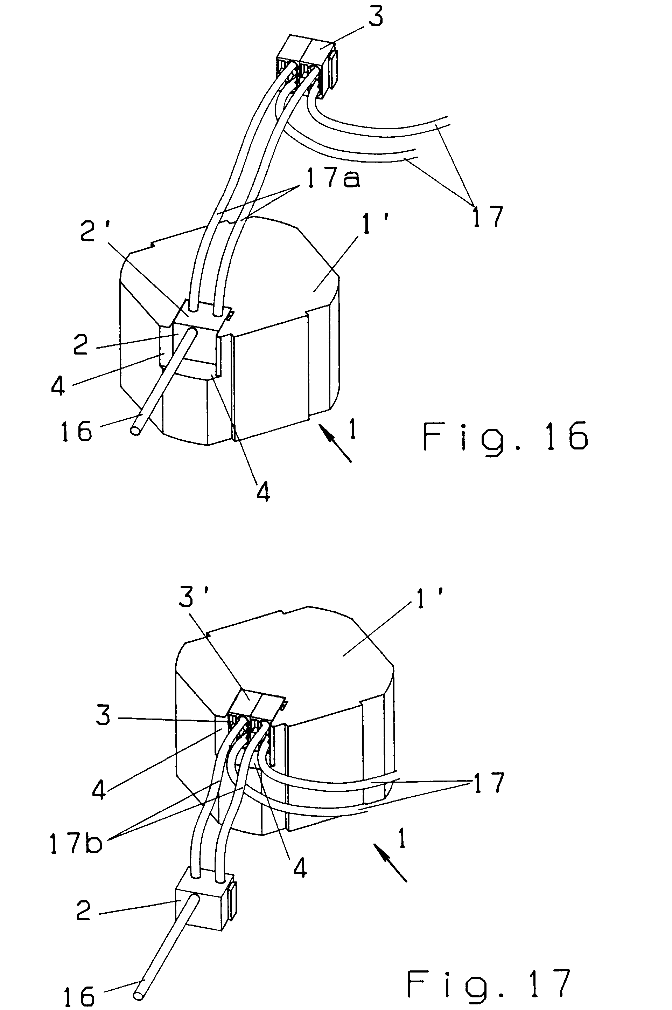

Das Ausführungsbeispiel der Fig. 16 zeigt wieder die BCU-Einheit 1 mit einer Aussparung 4, in welche die nungsschutzeinheit 2 so eingebaut ist, daß ihre obere Fläche 2' bündig mit der sie umgebenden oberen Fläche 1' der BCU-Einheit ist. An diese Überspannungsschutzeinheit sind, bevorzugt fest, der Erdanschluß 16 und zwei BUS-Leitungen 17a angeschlossen. Die anderen Enden der BUS-Leitungen 17a sind lösbar an einen Klemmstein 3 angeschlossen, an dem ferner auch die vom Gebäude her führenden BUS-Leitung 17 angeschlossen ist. Die BUS-Leitungen 17, 17a sind innerhalb des Klemmsteines 3 elektrisch miteinander verbunden. Auch in diesem Ausführungsbeispiel ist ein raumsparender Zusammenbau von BUS-Einheit und Überspannungsschutzeinheit gegeben, wobei sich die Überspannungsschutzeinheit ebenfalls in einem würfelförmigen Gehäuse (wie dargestellt) befinden kann. Der Unterschied zu den vorhergehenden Ausführungsbeispielen liegt darin, daß der Klemmstein 3 nicht unmittelbar an der BCU-Einheit vorgesehen ist, sondern davon entfernt über die BUS-Leitungen 17a gehalten ist. Dies ist dann von Vorteil, wenn aus irgendwelchen, vor Ort gegebenen Gründen eine solche Form der Verdrahtung mit Hilfe des zwischengeschalteten Klemmsteines erforderlich ist.

Erwähnt sei, daß der Anschluß der BUS-Leitungen 17a an die Überspannungsschutzeinheit nicht nur fest, z.B. verlötet, sein kann, sondern auch bei Wunsch oder Erfordernis lösbar mittels nicht dargestellter Verklemmungen. Das gleiche gilt für den Anschluß der nachstehend zu Fig. 17 erläuterten BUS-Leitungen 17b an die Überspannungsschutzeinheit 2. Auch dies kann lösbar oder fest sein. Das gleiche gilt für die jeweiligen Erdleitungen 16.

Die vorstehend bereits angesprochene Ausführungsform nach Fig. 17 zeigt eine BCU-Einheit mit Aussparung 4, in welche hier ein Klemmstein 3 konventioneller Bauart eingesetzt ist. Die Oberfläche 3' dieses Klemmsteines ist auch hier bevorzugt bündig mit der Oberfläche 1' der BCU-Einheit. Die Überspannungsschutzeinheit 2 ist hier, ebenfalls bevorzugt in Form eines geschlossenen (ausgenommen die Zu- und Ableitungen) Würfels 2, von der BCU-Einheit in einer gewissen Distanz gehalten und mit ihr und den BUS-Leitungen 17 über BUS-Zuleitungen 17b elektrisch verbunden. Es versteht sich, daß innerhalb des Klemmsteines 3 die BUS-Leitungen 17 und die BUS-Leitungen 17b sowie die Ableitungen zu den Endgeräten u.s.w. elektrisch im Sinne der Schaltbilder der Fig. 6 und 10 miteinander verschaltet sind. Hier ist zwar der Klemmstein 3 raumsparend in die BCU-Einheit integriert, jedoch die Überspannungsschutzeinheit 2 davon entfernt. Diese Ausführung kann z.B. dann angewendet werden, wenn bereits eine BCU-Einheit mit Klemmstein 3 irgendwo fest installiert ist und es zweckmäßig erscheint, den Überspannungsschutz durch eine davon räumlich etwas getrennte, jedoch elektrisch über die Leitungen 17b verbundene Überspannungsschutzeinheit zu verwirklichen. Die Überspannungsschutzeinheit ist hier zwar nicht unmittelbar räumlich in den Leitungszug der BUS-Leitungen 17 bis zum Endgerät eingebaut jedoch in Form eines gesonderten Bauelementes vorgesehen und voll wirksam elektrisch dazugeschaltet.

## Patentansprüche

1. Anordnung mit einer BCU-Einheit (1) und mit Mitteln (3, 17a) zum lösbaren Anschluß von BUS-Leitungen (17) an diese BCU-Einheit (1), welche die BUS-Signale elektrisch an ein Endgerät, Steuerteil oder eine Steckdose weiterleitet, insbesondere entsprechende Anordnung in einem Installationssystem wie dem EIB-System, dadurch gekennzeichnet, daß zwischen den BUS-Anschluß einerseits und das Endgerät, den Steuerteil oder die Steckdose andererseits Überspannungsschutzmittel (14, 15) geschaltet und derart mit den BUS-Leitungen (17) verbunden sind, daß an oder zwischen den BUS-Leitungen (17) entstehende Überspannungen über eine zu den Überspannungsschutzmitteln (14, 15) geführte Erdleitung (16) abgeleitet werden, und daß sich die Überspannungsschutzmittel (14, 15) innerhalb eines gesonderten Bauelementes befinden und mit diesem eine Überspannungsschutzeinheit (2) bilden, die mit der BCU-Einheit (1) in Verbindung steht.

2. Anordnung nach Anspruch 1, dadurch gekennzeichnet, daß die Überspannungsschutzeinheit sowohl Mittel für den elektrischen Anschluß (8) der BUS-Leitungen (17) oder einen Klemmstein (3) als auch Mittel für den elektrischen Anschluß (6) für die BCU-Einheit (1) aufweist, wobei diese Anschlußmittel (8, 6) miteinander leitend verbunden sind, und daß die Überspannungsschutzmittel (14, 15) innerhalb der Überspannungsschutzeinheit mit den Anschlußmitteln (6, 8) in elektrischer Schaltverbindung stehen.

3. Anordnung nach Anspruch 2, dadurch gekennzeichnet, daß die Überspannungsschutzeinheit (2) als Zwischensteckteil oder -Adapter BCU-seitig Anschlußmittel in Form von Buchsen (6) aufweist, die über Stecker (5) einer BCU-Einheit (1) passen, und daß die Anschlußmittel BUS-seitig als Stecker (8) ausgebildet sind, über die entweder ein Klemmbaustein (3) mit entsprechenden Stecköffnungen sowie Klemmanschlüssen, insbesondere Schneidklemmen für die BUS-Leitungen (17), oder aber die BUS-Leitungen (17) direkt steckbar sind.

4. Anordnung nach Anspruch 3, dadurch gekennzeichnet, daß die BCU-seitigen Anschlußmittel und die BUS-seitigen Anschlußmittel der Überspannungsschutzeinheit an einander entgegengesetzten Seiten dieser Einheit vorgesehen sind.

5. Anordnung nach Anspruch 3 oder 4, dadurch gekennzeichnet, daß die Anschlußbuchsen (6) der Überspannungsschutzeinheit auf Stecker (5) handelsüblicher BCU-Einheiten passen.

6. Anordnung nach einem der Ansprüche 3 bis 5, dadurch gekennzeichnet, daß die BUS-seitigen Stecker (8) zu üblichen Steckbuchsen eines Klemmsteines (3) oder von BUS-Leitungen (17) passen.

7. Anordnung nach einem der Ansprüche 4 bis 6, dadurch gekennzeichnet, daß die BUS-seitigen Anschlußmittel (8) und die BCU-seitigen Anschlußmittel (6) miteinander fluchtend und von der einen Seite zur anderen Seite der Überspannungsschutzeinheit durchgehend ausgebildet sind.

8. Anordnung nach einem der Ansprüche 3 bis 7, dadurch gekennzeichnet, daß die Überspannungsschutzeinheit (2) ein bevorzugt würfelförmiges, im wesentlichen allseits geschlossenes Gehäuse (10) aufweist, in dem die Überspannungsschutzmittel berührungssicher untergebracht sind.

9. Anordnung nach einem der Ansprüche 1 bis 8, dadurch gekennzeichnet, daß die Überspannungsschutzeinheit, insbesondere ein Gehäuse (10) der Überspannungsschutzeinheit (2) BCU-seitig so dimensioniert ist, daß sie bzw. es in eine Aussparung (4) paßt, welche die Stecker (5) der BCU-Einheit umgibt.

10. Anordnung nach einem der Ansprüche 1 bis 9, dadurch gekennzeichnet, daß die Überspannungsschutzeinheit (2) BUS-seitig eine Aussparung (9) zur Aufnahme eines Klemmsteines (3) aufweist.

11. Anordnung nach einem der Ansprüche 8 bis 10, dadurch gekennzeichnet, daß an dem BCU-seitigen Bereich des Gehäuses (10) und der Aussparung (4) der BCU-Einheit, sowie an dem Klemmstein (3) und der BUS-seitigen Aussparung (9) der Überspannungsschutzeinheit (2) in Steckrichtung verlaufende Führungen (23) und darin eingreifende, im Querschnitt bevorzugt schwalbenschwanzförmige Steckleisten (23') vorgesehen sind.

12. Anordnung nach einem der Ansprüche 8 bis 11, dadurch gekennzeichnet, daß die Überspannungsschutzeinheit (2) eine Platine (13) aufweist, die mit dem Gehäuse (10) der Einheit verbindbar ist, und daß die Platine (13) zumindest die Überspannungsschutzmittel (14, 15) der spannungsschutzeinheit trägt.

13. Anordnung nach Anspruch 12, dadurch gekennzeichnet, daß die Platine (13) auch die Anschlußmittel (6, 8) der Überspannungsschutzeinheit (2) trägt.

14. Anordnung nach Anspruch 12, dadurch gekennzeichnet, daß als separates Bauteil des Gehäuses ein Unterboden (19) vorgesehen ist, der in der Einbaulage die Platine (13) mit deren Überspannungsschutzmitteln haltend unterseitig abdeckt und mit dem Gehäuse (10) verbunden ist.

15. Anordnung nach Anspruch 14, dadurch gekennzeichnet, daß der Unterboden (13) unterhalb der BCU-seitigen Anschlußmittel (6) Öffnungen (7) zum Durchtritt der Stecker (5) der BCU-Einheit aufweist.

16. Anordnung nach einem der Ansprüche 1 bis 15, dadurch gekennzeichnet, daß am Gehäuse (10), insbesondere an der Platine (13), Seitenflächen (24) vorgesehen sind, welche die Grobschutzmittel (14) des Überspannungsschutzes mechanisch halten und elektrisch anschließen.

17. Anordnung nach Anspruch 16, dadurch gekennzeichnet, daß die Seitenflächen (24) zugleich als Längsimpedanzen (27) ausgebildet und entsprechend elektrisch mit den Grobschutzmitteln (14) des Überspannungsschutzes und den übrigen Anschlüssen der zugehörigen Schaltung verbunden sind.

18. Anordnung nach einem der Ansprüche 12 bis 17, dadurch gekennzeichnet, daß die Platine (13) zugleich den Erdanschluß (16) trägt.

19. Anordnung nach einem der Ansprüche 1, 8, 9, 12, 14 bis 18, dadurch gekennzeichnet, daß die BUS-Leitungen (17) fest mit der Überspannungsschutzeinheit (2) verbunden sind.

20. Anordnung nach einem der Ansprüche 1 bis 9, 11 bis 19, dadurch gekennzeichnet, daß die Überspannungsschutzeinheit in eine handelsübliche, für die Aufnahme eines Klemmsteines (3) vorgesehene Aussparung (4) der BCU-Einheit paßt und zur Aufnahme der BUS-Leitung ausgebildet ist, und daß die Oberseite der Überspannungsschutzeinheit nicht oder nur wenig über die angrenzende Oberfläche (1') der BCU-Einheit hinausragt.

21. Anordnung nach Anspruch 20, dadurch gekennzeichnet, daß die Oberseite (3") der Überspannungsschutzeinheit bündig mit der die Aussparung (4) umgebenden Fläche (1') der BCU-Einheit ist.

22. Anordnung nach Anspruch 20 oder 21, dadurch gekennzeichnet, daß ein Anschlußmittel (33, 34) aufweisender Klemmstein (3) als in die Aussparung (4) der BCU-Einheit passende Überspannungsschutzeinheit ausgebildet ist und in seinem Innern die Überspannungsschutzmittel (14, 15) aufweist.

23. Anordnung nach Anspruch 22, dadurch gekennzeichnet, daß auf einer Grundplatte (28) des Klemmsteines (3) die Überspannungsschutzmittel (29, 30), der Erdanschluß (31, 32, 32'), die Phasenanschlüsse (33, 34) und Anschlußbuchsen (6) zur BCU-Einheit befestigt sind, und daß die Grundplatte (28) und die vorgenannten Bauteile vom Gehäuse des Klemmsteines umgeben sind, wobei die Gehäusewandung entsprechende, zu den Anschlüssen (31, 32, 32'; 33, 34) führende Einstecköffnungen (38, 39) aufweist.

24. Anordnung nach Anspruch 22 oder 23, dadurch gekennzeichnet, daß auf einer Seite der Grundplatte (28) zwei scheibenförmige Gasableiter (29) und dazwischen ein etwa scheiben- oder zylinderförmiger Varistor (30) angebracht sind.

25. Anordnung nach einem der Ansprüche 1 bis 21, dadurch gekennzeichnet, daß ein Klemmstein (3) vorgesehen ist, der die BUS-Leitung (17) elektrisch mit einer weiteren, zur Überspannungsschutzeinheit (2) führenden BUS-Leitung (17a, 17b) verbindet.

26. Anordnung nach Anspruch 25, dadurch gekennzeichnet, daß die Überspannungsschutzeinheit (2) sich an der BCU-Einheit befindet, während der Klemmstein (3) einen Abstand von der BCU-Einheit besitzt.

27. Anordnung nach Anspruch 25, dadurch gekennzeichnet, daß die Überspannungsschutzeinheit (2) sich im Abstand von der BCU-Einheit (1) befindet und der Klemmstein (3) an oder in der BCU-Einheit vorgesehen ist, und daß der Klemmstein (3) über die weitere BUS-Leitung (17b) mit der Überspannungsschutzeinheit elektrisch verbunden ist und sie elektrisch mit der an ihn angeschlossenen BUS-Leitungen (17) sowie den elektrischen Leitungen zu den Endgeräten oder dergleichen elektrisch verbindet.

## Claims

1. Arrangement having a BCU unit (1) and having means (3, 17a) for the separable connection of BUS lines (17) to said BCU unit (1), which transmits the BUS signals electrically to a terminal appliance, control section or a plug socket, in particular a suitable arrangement in an installation system such as the EIB system, characterized in that between the BUS connection, on the one hand, and the terminal appliance, the control section or the plug socket, on the other hand, overvoltage protection means (14, 15) are interposed and are connected to the BUS lines (17) in such a way that overvoltages occurring at or between the BUS lines (17) are dissipated via an earth line (16) routed to the overvoltage protection means (14, 15), and in that the overvoltage protection means (14, 15) are disposed within a separate component and form with the latter an overvoltage protection unit (2) which is connected to the BCU unit (1).

2. Arrangement according to claim 1, characterized in that the overvoltage protection unit comprises both means for the electrical connection (8) of the BUS lines (17) or a terminal block (3) and means for the electrical connection (6) of the BCU unit (1), wherein said connection means (8, 6) are conductively interconnected, and in that the overvoltage protection means (14, 15) are electrically interconnected within the overvoltage protection unit to the connection means (6 , 8).

3. Arrangement according to claim 2, characterized in that the overvoltage protection unit (2) has, as intermediate plug part or adapter, connection means on the BCU side in the form of sockets (6) which fit a BCU unit (1) via plugs (5) and in that the connection means are designed on the BUS side as plugs (8) by means of which either a terminal block (3) with matching plug openings and terminal connections, in particular insulation--piercing terminals for the BUS lines (17) or, alternatively, the BUS lines (17) can be plugged directly

4. Arrangement according to claim 3, characterized in that the connection means on the BCU side and the connection means on the BUS side of the overvoltage protection unit are provided at mutually opposite sides of said unit.

5. Arrangement according to claim 3 or 4, characterized in that the connection sockets (6) of the overvoltage protection unit fit plugs (5) of commercial BCU units.

6. Arrangement according to one of claims 3 to 5, characterized in that the plugs (8) on the BUS side fit standard plug sockets of a terminal block (3) or of BUS lines (17).

7. Arrangement according to one of claims 4 to 6 characterized in that the connection means (8) on the BUS side and the connection means (6) on the BCU side are designed in a mutually aligned manner and in a continuous manner from one side of the overvoltage protection unit to the other.

8. Arrangement according to one of claims 3 to 7, characterized in that the overvoltage protection unit (2) has a preferably cube-shaped housing (10) essentially sealed on all sides in which the overvoltage protection means can be accommodated in a shock-protected manner

9. Arrangement according to one of claims 1 to 8, characterized in that the overvoltage protection unit, in particular a housing (10) of the overvoltage protection unit (2), is dimensioned on the BCU side so that the unit or the means fit into a recess (4) which surrounds the plug (5) of the BCU unit.

10. Arrangement according to one of claims 1 to 9, characterized in that the overvoltage protection unit (2) has, on the BUS side, a recess (9) for receiving a terminal block (3).

11. Arrangement according to one of claims 8 to 10, characterized in that guides (23) extending the plug direction and plug strips (23) engaging therein and preferably of dovetail-shaped cross section are provided on the BCU-side region of the housing (10) and the recess (4) of the BCU region, as well as on the terminal block (3) and the recess (9) on the BUS side of the overvoltage protection unit (2).

12. Arrangement according to one of claims 8 to 11, characterized in that the overvoltage protection unit (2) has a printed circuit board (13) which can be connected to the housing (10) of the unit and in that the printed circuit board (13) carries at least the overvoltage protection means (14, 15) of the overvoltage protection unit.

13. Arrangement according to claim 12, characterized in that the printed circuit board (13) also carries the connection means (6, 8) of the overvoltage protection unit (2).

14. Arrangement according to claim 12, characterized in that there is provided as separate component of the housing a lower base (19) which, in the assembly position, covers the printed circuit board (13) together with its overvoltage protection means in a supporting manner on the underside and is connected to the housing (10).

15. Arrangement according to claim 14, characterized in that, below the connection means (6) on the BCU side, the lower base (13) has openings (7) for the passage of the plugs (5) of the BCU unit.

16. Arrangement according to one of claims 1 to 15, characterized in that there are provided on the housing (10), in particular on the printed circuit board (13), lateral surfaces (24) which mechanically support the overall protection means (14) of the overvoltage protection and connect them electrically.

17. Arrangement according to claim 16, characterized in that the lateral surfaces (24) are also designed as series impedances (27) and are suitably connected electrically to the overall protection means (14) of the overvoltage protection and the other connections of the associated circuit.

18. Arrangement according to one of claims 12 to 17, characterized in that the printed circuit board (13) also carries the earth connection (16).

19. Arrangement according to one of claims 1, 8, 9, 12, 14 to 18, characterized in that the BUS lines (17) are permanently connected to the overvoltage protection unit (2).

20. Arrangement according to one of claims 1 to 9, 11 to 19, characterized in that the overvoltage protection unit fits into a commercial recess (4), provided for the reception of a terminal block (3), of the BCU unit and is designed to receive the BUS line, and in that the upper side of the overvoltage protection unit does not extend or extends only to a small extent beyond the adjacent surface (1') of the BCU unit.

21. Arrangement according to claim 20, characterized in that the upper side (3") of the overvoltage protection unit is flush with that surface (1') of the BCU unit which surrounds the recess (4).

22. Arrangement according to claim 20 or 21, characterized in that a termidal block (3) having connection means (33, 34) is designed as an overvoltage protection unit fitting into the recess (4) of the BCU unit and has the overvoltage protection means (14, 15) in its interior.

23. Arrangement according to claim 22, characterized in that the overvoltage protection means (29, 30), the earth connection (31, 32, 32'), the phase connections (33, 34) and connection sockets (6) to the BCU unit are mounted on a base plate (28) of the terminal block (3), and in that the base plate (28) and the abovementiondd components are surrounded by the housing of the terminal block, wherein the housing wall has corresponding insertion openings (38, 39) leading to the connections (31, 32, 32', 33, 34).

24. Arrangement according to claim 22, or 23, characterized in that two disc-shaped gas-type arresters (29) and between them a roughly disc-shaped or cylinder-shaped varistor (30) are provided on one side of the base plate (28).

25. Arrangement according to one of claims 1 to 21, characterized in that a terminal block (3) is provided which connects the BUS line (17) electrically to a further BUS line (17a, 17b) leading to the overvoltage protection unit (2).

26. Arrangement according to claim 25, characterized in that the overvoltage procection unit (2) is disposed on the BCU unit, while the terminal block (3) is at a distance from the BCU unit.

27. Arrangement according to claim 25, characterized in that the overvoltage protection unit (2) is disposed at a distance from the BCU unit (I) and the terminal block (3) is provided on or in the BCU unit and in that the terminal block (3) is electrically connected to the overvoltage protection unit via the further BUS line (17b) and connects the overvoltage protection unit electrically to the BUS lines (17) connected to the terminal block and also connects the overvoltage protection unit electrically to the electrical lines leading to the terminal appliances or the like.

## Revendications

1. Agencement comprenant une unité d'accouplement de bus (BCU 1) et des moyens (3, 17a) pour raccorder d'une façon amovible des bus (17) à cette unité d'accouplement de bus (1) qui transmet électriquement les signaux des bus à un appareil d'utilisation finale, à un organe de commande ou à une prise de courant, et en particulier agencement correspondant dans un système d'installation comme le système européen d'installation de bus (EBI), caractérisé par le fait que des moyens de protection contre les surtensions (14, 15) sont montés entre le raccordement aux bus, d'une part, et l'appareil d'utilisation finale, l'organe de commande ou la prise de courant, d'autre part, et qu'ils sont reliés aux bus (17) d'une manière telle que les surtensions prenant naissance sur ou entre les bus (17) soient déviées par l'intermédiaire d'un conducteur de mise à la terre (16) amené aux moyens de protection contre les surtensions (14, 15), et par le fait que les moyens de protection contre les surtensions (14, 15) se trouvent à l'intérieur d'un élément constitutif séparé, et qu'ils constituent avec celui-ci une unité de protection contre les surtensions (2) qui est reliée à l'unité d'accouplement des bus (1).

2. Agencement selon la revendication 1, caractérisé par le fait que l'unité de protection contre les surtensions comporte aussi bien des moyens (8) pour le raccordement électrique des bus (17) ou un bloc de serrage (3) que des moyens (6) pour le raccordement électrique de l'unité d'accouplement des bus (1), ces moyens de raccordement (8, 6) étant reliés entre eux d'une manière conductrice, et par le fait que les moyens de protection contre les surtensions (14, 15) sont reliés aux moyens de raccordement (6, 8) par une connexion d'accouplement électrique à l'intérieur de l'unité de protection contre les surtensions.

3. Agencement selon la revendication 2, caractérisé par le fait que l'unité de protection contre les surtensions (2) présente du côté de l'unité d'accouplement des bus, pour servir d'élément enfichable intermédiaire ou d'adaptateur, des moyens de raccordement sous la forme de prises (6) qui s'ajustent à une unité d'accouplement des bus (1) par l'intermédiaire de fiches (5), et par le fait que les moyens de raccordement sont réalisés du côté des bus sous la forme de fiches (8) sur lesquelles on peut, soit enfoncer directement les bus (17), soit encore enfoncer un bloc de serrage (3) pourvu d'ouvertures d'enfichage correspondantes et de raccords de serrage, et en particulier de pinces coupant l'isolant des bus (17).

4. Agencement selon la revendication 3, caractérisé par le fait que les moyens de raccordement de l'unité de protection contre les surtensions qui sont situés du côté de l'unité d'accouplement des bus et ses moyens de raccordement qui sont situés du côté des bus sont prévus sur des côtés opposés entre eux de cette unité.

5. Agencement selon la revendication 3 ou 4, caractérisé par le fait que les prises de raccordement (6) de l'unité de protection contre les surtensions s'ajustent sur des fiches (5) d'unités d'accouplement de bus qui sont disponibles dans le commerce.

6. Agencement selon l'une des revendications 3 à 5, caractérisé par le fait que les fiches (8) qui sont situées du côté des bus s'ajustent sur des prises habituelles d'un bloc de serrage (3) ou de bus (17).

7. Agencement selon l'une des revendications 4 à 6, caractérisé par le fait que les moyens de raccordement (8) qui sont situés du côté des bus et les moyens de raccordement (6) qui sont situés du côté de l'unité d'accouplement des bus sont réalisés dans l'alignement les uns des autres en s'étendant continûment d'un côté à l'autre de l'unité de protection contre les surtensions.

8. Agencement selon l'une des revendications 3 à 7, caractérisé par le fait que l'unité de protection contre les surtensions (2) comporte un boîtier (10), de préférence en forme de dé, qui est fermé sur tous ses côtés pour l'essentiel et dans lequel les moyens de protection contre les surtensions sont logés en étant protégés contre les contacts.

9. Agencement selon l'une des revendications 1 à 8, caractérisé par le fait que l'unité de protection contre les surtensions, et en particulier un boîtier (10) de l'unité de protection contre les surtensions (2), est dimensionnée du côté de l'unité d'accouplement des bus de manière à s'ajuster dans un évidement (4) qui entoure les fiches (5) de l'unité d'accouplement des bus.

10. Agencement selon l'une des revendications 1 à 9, caractérisé par le fait que l'unité de protection contre les surtensions (2) présente du côté des bus un évidement (9) qui est destiné à recevoir un bloc de serrage (3).

11. Agencement selon l'une des revendications 8 à 10, caractérisé par le fait qu'il est prévu dans la région située du côté de l'unité d'accouplement des bus du boîtier (10) et de l'évidement (4) de l'unité d'accouplement des bus, ainsi que sur le bloc de serrage (3) et sur l'évidement (9) de l'unité de protection contre les surtensions (2) situé du côté des bus, des guidages (23) qui s'étendent dans la direction de l'enfichage et des baguettes d'enfichage (23') qui pénètrent dans ceux-ci et dont la section transversale est de préférence en forme de queue d'aronde.

12. Agencement selon l'une des revendications 8 à 11, caractérisé par le fait que l'unité de protection contre les surtensions (2) présente une plaque (13) qui peut être reliée au boîtier (10) de l'unité, et par le fait que la plaque (13) porte au moins les moyens de protection contre les surtensions (14, 15) de l'unité de protection contre les surtensions.

13. Agencement selon la revendication 12, caractérisé par le fait que la plaque (13) porte aussi les moyens de raccordement (6, 8) de l'unité de protection contre les surtensions (2).

14. Agencement selon la revendication 12, caractérisé par le fait qu'il est prévu comme élément constitutif séparé du boîtier un fond inférieur (19) qui recouvre la plaque (13) pourvue de ses moyens de protection contre les surtensions en la maintenant du côté inférieur, dans la position de montage, et qui est relié au boîtier (10).

15. Agencement selon la revendication 14, caractérisé par le fait que le fond inférieur (19) comporte, au-dessous des moyens de raccordement (6) situés du côté de l'unité d'accouplement des bus, des ouvertures (7) qui sont destinées au passage des fiches (5) de l'unité d'accouplement des bus.

16. Agencement selon l'une des revendications 1 à 15, caractérisé par le fait qu'il est prévu sur le boîtier (10), et en particulier sur la plaque (13), des surfaces latérales (24) qui maintiennent mécaniquement les moyens de protection grossière (14) de la protection contre les surtensions et qui les raccordent électriquement.

17. Agencement selon la revendication 16, caractérisé par le fait que les surfaces latérales (24) sont réalisées en même temps sous la forme d'impédances série (27) en étant en conséquence reliées électriquement aux moyens de protection grossière (14) de la protection contre les surtensions et aux autres raccordements du circuit associé.

18. Agencement selon l'une des revendications 12 à 17, caractérisé par le fait que la plaque (13) porte en même temps le raccordement à la terre (16).

19. Agencement selon l'une des revendications 1, 8, 9, 12, 14 à 18, caractérisé par le fait que les bus (17) sont reliés rigidement à l'unité de protection contre les surtensions (2).

20. Agencement selon l'une des revendications 1 à 9, 11 à 19, caractérisé par le fait que l'unité de protection contre les surtensions s'ajuste dans un évidement (4) de l'unité d'accouplement des bus qui est disponible dans le commerce et qui est prévu pour recevoir un bloc de serrage (3), et qu'elle est réalisée en vue de recevoir le bus, et par le fait que le côté supérieur de l'unité de protection contre les surtensions ne fait pas saillie ou ne fait que légèrement saillie au-dessus de la surface adjacente (1') de l'unité d'accouplement des bus.

21. Agencement selon la revendication 20, caractérisé par le fait que le côté supérieur (3") de l'unité de protection contre les surtensions est aligné sur la surface (1') de l'unité d'accouplement des bus qui entoure l'évidement (4).

22. Agencement selon la revendication 20 ou 21, caractérisé par le fait qu'un bloc de serrage (3) présentant des moyens de raccordement (33, 34) est réalisé sous la forme d'une unité de protection contre les surtensions qui s'ajuste dans l'évidement (4) de l'unité d'accouplement des bus, et qu'il présente intérieurement les moyens de protection contre les surtensions (14, 15).

23. Agencement selon la revendication 22, caractérisé par le fait que les moyens de protection contre les surtensions (29, 30), le raccordement à la terre (31, 32, 32'), les raccordements des phases (33, 34) et des prises de raccordement (6) amenant à l'unité d'accouplement des bus sont fixés sur une plaque de base (28) du bloc de serrage (3), et par le fait que la plaque de base (28) et les éléments constitutifs précités sont entourés par le boîtier du bloc de serrage, la paroi du boîtier présentant des ouvertures d'enfichage correspondantes (38, 39) qui conduisent aux raccordements (31, 32, 32' ; 33, 34).

24. Agencement selon la revendication 22 ou 23, caractérisé par le fait que deux organes de déviation des gaz en forme de disques (29) sont disposés sur un côté de la plaque de base (28), une varistance (30) à peu près en forme de disque ou de cylindre étant montée entre eux.

25. Agencement selon l'une des revendications 1 à 21, caractérisé par le fait qu'il est prévu un bloc de serrage (3) qui relie électriquement le bus (17) à un autre bus (17a, 17b), celui-ci amenant à l'unité de protection contre les surtensions (2).

26. Agencement selon la revendication 25, caractérisé par le fait que l'unité de protection contre les surtensions (2) se trouve sur l'unité d'accouplement des bus, tandis que le bloc de serrage (3) présente une certaine distance par rapport à l'unité d'accouplement des bus.

27. Agencement selon la revendication 25, caractérisé par le fait que l'unité de protection contre les surtensions (2) se trouve à distance de l'unité d'accouplement des bus (1), et que le bloc de serrage (3) est prévu sur ou dans l'unité d'accouplement des bus, et par le fait que le bloc de serrage (3) est relié électriquement l'unité de protection contre les surtensions par l'intermédiaire de l'autre bus (17b), et qu'il la relie électriquement aux bus (17) qui lui sont raccordés, de même qu'il relie électriquement les conducteurs électriques aux appareils d'utilisation finale ou similaires.
